(19) Europäisches Patentamt
European Patent Office
Office européen des brevets

(11) **EP 4 559 957 A1**

(12) **EUROPEAN PATENT APPLICATION**
published in accordance with Art. 153(4) EPC

(43) Date of publication:
**28.05.2025 Bulletin 2025/22**

(21) Application number: **23845184.3**

(22) Date of filing: **28.06.2023**

(51) International Patent Classification (IPC):
**C08J 7/04** (2020.01)   **C08L 67/02** (2006.01)
**C09D 4/02** (2006.01)   **C03C 17/42** (2006.01)
**C03B 23/02** (2006.01)

(52) Cooperative Patent Classification (CPC):
**C03B 23/02; C03C 17/42; C08J 7/04; C08L 67/02; C09D 4/00; H04N 23/52**

(86) International application number:
**PCT/CN2023/103194**

(87) International publication number:
**WO 2024/021971 (01.02.2024 Gazette 2024/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.07.2022  CN 202210901538**

(71) Applicant: **Huawei Technologies Co., Ltd.**
**Shenzhen, Guangdong 518129 (CN)**

(72) Inventors:
- **SHI, Diwen**
  **Shenzhen, Guangdong 518129 (CN)**
- **LI, Cheng**
  **Shenzhen, Guangdong 518129 (CN)**

- **HUANG, Xin**
  **Shenzhen, Guangdong 518129 (CN)**
- **ZOU, Hailiang**
  **Shenzhen, Guangdong 518129 (CN)**
- **REN, Hui**
  **Shenzhen, Guangdong 518129 (CN)**
- **WU, Jiang**
  **Shenzhen, Guangdong 518129 (CN)**
- **DOU, Yingying**
  **Guangzhou, Guangdong 510275 (CN)**
- **TIAN, Xuelin**
  **Guangzhou, Guangdong 510275 (CN)**

(74) Representative: **Körber, Martin Hans**
**Mitscherlich PartmbB**
**Patent- und Rechtsanwälte**
**Karlstraße 7**
**80333 München (DE)**

(54) **LIGHT-TRANSMITTING PLATE, STRUCTURAL MEMBER, AND LIGHT SENSING APPARATUS**

(57)   This disclosure discloses a light-transmitting plate, a mechanical part, and a photosensitive apparatus, and belongs to the field of polymer materials. The light-transmitting plate includes a transparent base and a transparent superhydrophobic layer. The transparent superhydrophobic layer includes a polymer film body and a nano array structure. The polymer film body is formed on a surface of the transparent base. The nano array structure is integrally formed on a surface that is of the polymer film body and that is away from the transparent base. The nano array structure is arranged at a single layer. An array periodicity of the nano array structure is less than or equal to a wavelength of a target light ray. The target light ray is a light ray transmitted through the light-transmitting plate. The light-transmitting plate provided in embodiments of this disclosure has self-cleaning performance and optical imaging performance.

The light-transmitting plate can be used in the photosensitive apparatus, for example, used in a camera device, so that a window has a self-cleaning feature, to avoid adhesion of dust carrying moisture, thereby keeping the window clean at all times, and ensuring clear imaging of the camera device.

FIG. 1

## Description

This disclosure claims priority to Chinese Patent Application No. 202210901538.4, filed on July 28, 2022 and entitled "LIGHT-TRANSMITTING PLATE, MECHANICAL PART, AND PHOTOSENSITIVE APPARATUS", which is incorporated herein by reference in its entirety.

## TECHNICAL FIELD

This disclosure relates to the field of polymer materials, and in particular, to a light-transmitting plate, a mechanical part, and a photosensitive apparatus.

## BACKGROUND

When an image shooting device is used in a heavily dirty environment, impurities easily adhere to window glass of a camera of the image shooting device to form a dirty layer. This is particularly not conducive to imaging of the camera.

Currently, the dirty layer on the window glass is either manually removed, or removed by configuring a mechanical device, for example, a mechanical scraper or a flush nozzle, for the camera.

However, these measures each have problems such as complex operations and high costs.

## SUMMARY

In view of this, this disclosure provides a light-transmitting plate, a mechanical part, and a photosensitive apparatus, to resolve the foregoing technical problems. Specifically, the following technical solutions are included:
According to a first aspect, a light-transmitting plate is provided. The light-transmitting plate includes a transparent base and a transparent superhydrophobic layer.

The transparent superhydrophobic layer includes a polymer film body and a nano array structure. The polymer film body is formed on a surface of the transparent base. The nano array structure is integrally formed on a surface that is of the polymer film body and that is away from the transparent base.

The nano array structure is arranged at a single layer. An array periodicity of the nano array structure is less than or equal to a wavelength of a target light ray. The target light ray is a light ray transmitted through the light-transmitting plate.

According to the light-transmitting plate provided in this embodiment of this disclosure, the transparent base is disposed to provide sufficient strength for the light-transmitting plate and provide stable support for the transparent superhydrophobic layer. For the transparent superhydrophobic layer, the nano array structure arranged at the single layer is disposed on the transparent superhydrophobic layer, so that the transparent superhydrophobic layer has a stable superhydrophobic feature. This can effectively prevent water, dust carrying moisture, and the like from remaining on or adhering to the transparent superhydrophobic layer. In addition, a design of the nano array structure can further effectively reduce a contact area between the transparent superhydrophobic layer and water, dust carrying moisture, and the like, to further reduce adhesion of the water, the dust carrying moisture, and the like to the transparent superhydrophobic layer, and provide self-cleaning effect for the light-transmitting plate. Further, the design of the nano array structure arranged at the single layer provides some antireflective effect for the transparent superhydrophobic layer, and the array periodicity of the nano array structure is less than or equal to the wavelength of the target light ray. In this way, when the target light ray with the specific wavelength is incident from the light-transmitting plate, only zero-order scattering occurs, and scattering effect is effectively avoided, so that it can be ensured that the light-transmitting plate has a high light transmittance and low haze, thereby implementing clear imaging.

It can be learned that because the light-transmitting plate provided in embodiments of this disclosure has the self-cleaning performance and the optical imaging performance, the light-transmitting plate can be used in the photosensitive apparatus, for example, used in a camera device as a window of a camera or as a window of a lens cover, so that the window has a self-cleaning feature, to avoid adhesion of dust carrying moisture, thereby keeping the window clean at all times, and ensuring clear imaging of the camera device.

In some possible implementations, the nano array structure has a fluorine element, and a content of the fluorine element gradually increases from an inside of the nano array structure to a surface of the nano array structure.

In some possible implementations, a content of the fluorine element on an upper surface that is of the nano array structure and that is away from the polymer film body is greater than or equal to 20 atm%.

A content of the fluorine element at a position that is of the nano array structure and that is 50 nm deep from the surface is greater than or equal to 2 atm%.

The foregoing distribution of the fluorine element helps improve hydrophobicity of the nano array structure, and further helps improve wear resistance and impact resistance of the transparent superhydrophobic layer. Even if the surface of the nano array structure is worn out, a subsurface of the nano array structure can still have hydrophobicity to some extent.

In some possible implementations, the transparent superhydrophobic layer is prepared on the transparent base by using a first raw material by using a nanoimprinting process. The first raw material includes a hydrophobic substance.

In some possible implementations, an intermediate film layer having the nano array structure is prepared on the transparent base by using a second raw material by using a nanoimprinting process; and the nano array structure is modified by using a hydrophobic substance, to form a hydrophobic film on the nano array structure, and the transparent superhydrophobic layer is prepared.

In some possible implementations, the nano array structure includes a plurality of nanostructure units, and a structure of the plurality of nanostructure units includes at least one of a columnar shape, a columnar like shape, a truncated cone shape, a truncated cone like shape, a conical shape, a conical like shape, a needle shape, or a needle like shape.

The nanostructure unit of the foregoing structure facilitates preparing the nano array structure and controlling the array periodicity of the nano array structure, and provides some antireflective effect for the transparent superhydrophobic layer, so that the scattering effect is avoided while a light transmittance is ensured, and low haze and clear imaging are implemented.

In some possible implementations, the nano array structure includes the plurality of nanostructure units, and there is a nano-level rough structure on a surface of the nanostructure unit, so that the nanostructure unit has a stronger superhydrophobic feature.

In some possible implementations, a ratio of an area of an upper surface of the nano array structure to an area of a plane in which the nano array structure is located is less than or equal to 30%, to ensure excellent superhydrophobic performance.

In some possible implementations, the nano array structure includes the plurality of nanostructure units, and a structure parameter of the nanostructure unit meets at least one of the following conditions:

a ratio of an average diameter of the nanostructure unit to the wavelength of the target light ray is 1:40 to 1:2; or
a ratio of a height of the nanostructure unit to the wavelength of the target light ray is 1:10 to 1:1.

In this embodiment of this disclosure, the diameter and the height of the nanostructure unit are controlled within a specific range, so that excellent superhydrophobic performance, wear resistance, and scratch resistance can be achieved.

According to a second aspect, a mechanical part is provided. The mechanical part includes a window portion and a side frame portion. The side frame portion is disposed around an outer side of the window portion.

The window portion is prepared by using the light-transmitting plate shown in any one of the foregoing aspect and possible implementations.

In some possible implementations, the side frame portion has a connection structure, and the connection structure is configured to detachably connect the side frame portion to a device body.

The connection structure includes a threaded structure.

The mechanical part provided in this embodiment of this disclosure has all advantages of the light-transmitting plate according to this disclosure. The mechanical part may be used in any field that has an image shooting requirement or an image capture requirement, for example, scenarios such as a camera or a sensor that have a high self-cleaning requirement.

According to a third aspect, a photosensitive apparatus is provided. The photosensitive apparatus includes the mechanical part and the device body according to any one of the foregoing aspects and possible implementations. The mechanical part can have functions of at least self-cleaning and protection in the photosensitive apparatus.

In some possible implementations, the photosensitive apparatus further includes a cleaning mechanism. The cleaning mechanism is connected to the device body, and the cleaning mechanism is configured to clean the window portion.

For example, the photosensitive apparatus is an image shooting apparatus or a laser radar apparatus.

## BRIEF DESCRIPTION OF DRAWINGS

FIG. 1 is a diagram of a structure of an example of a transparent plate according to an embodiment of this disclosure;

FIG. 2 is a diagram of a structure of another example of a transparent plate according to an embodiment of this disclosure;

FIG. 3 is a diagram of a structure of still another example of a transparent plate according to an embodiment of this disclosure;

FIG. 4 is a diagram of an arrangement relationship of an example of a nanostructure unit according to an embodiment of this disclosure;

FIG. 5 is a flowchart of an example of nanoimprinting according to an embodiment of this disclosure;

FIG. 6 is a flowchart of an example of reverse mold preparation according to an embodiment of this disclosure;

FIG. 7 is a diagram of a structure of an example of a mechanical part according to an embodiment of this disclosure;

FIG. 8 is a diagram of a structure of an example of a photosensitive apparatus according to an embodiment of this disclosure;

FIG. 9 is a scanning electron micrograph of a reverse mold S1 according to Embodiment 1;

FIG. 10 is a scanning electron micrograph of a reverse mold S2 according to Embodiment 1;

FIG. 11 is a scanning electron micrograph of a reverse mold S3 according to Embodiment 1;

FIG. 12 is a scanning electron micrograph of a nano array mold according to Embodiment 1;

FIG. 13 is a scanning electron micrograph of a transparent superhydrophobic layer of a plate prepared in Embodiment 1;

FIG. 14 is an electron micrograph of a water contact angle and a roll angle at a transparent superhydrophobic layer of a plate prepared in Embodiment 1; and

FIG. 15 is a diagram of curves of relationships between light transmittances and wavelengths of a plate prepared in Embodiment 1 and a transparent base of the plate.

Reference numerals have the following meanings:

100-light-transmitting plate;
11-transparent base;
111-first base layer; 112-second base layer; and 113-third base layer;
12-transparent superhydrophobic layer; and 120-nano array structure;
1201-first liquid film;
13-nano array mold;
200-mechanical part;
201-window portion;
202-side frame portion;
300-photosensitive apparatus;
301-device body; and 3010-light-transmitting portion; and
40-reverse mold; 41-etching layer; 42-first substrate; 43-nano particle template layer; and 44-target nano array structure.

## DESCRIPTION OF EMBODIMENTS

To make technical solutions and advantages of this disclosure clearer, the following further describes implementations of this disclosure in detail with reference to the accompanying drawings.

When an image shooting device is used in a heavily dirty environment, impurities easily adhere to window glass of a camera of the image shooting device to form a dirty layer. This is particularly not conducive to imaging of the camera. For example, for a camera for surveillance activities in a mine, due to a harsh environment in the mine, especially for a fully mechanized mining face of coal mining, coal dust is very likely to cover, with water vapor, a surface of the window glass of the camera to form dirt. Generally, if dirt accumulates for several hours, imaging of the camera will be affected. Therefore, the dirt on the camera needs to be cleaned.

Currently, the dirty layer on the window glass is either manually removed, or removed by configuring a mechanical device, for example, a mechanical scraper or a flush nozzle, for the camera. However, these measures each have problems such as complex operations and high costs, and it is difficult to keep the camera clean and imaging clear at all times.

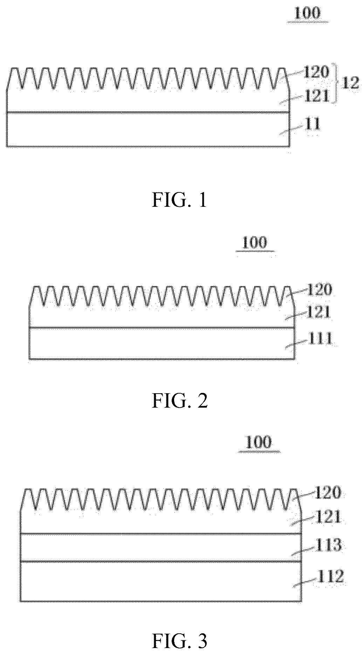

Embodiments of this disclosure provide a light-transmitting plate 100. As shown in FIG. 1 to FIG. 3, the light-transmitting plate 100 includes a transparent base 11 and a transparent superhydrophobic layer 12. The transparent superhydrophobic layer 12 includes a polymer film body 121 and a nano array structure 120. The polymer film body 121 is formed on a surface of the transparent base 11, and the nano array structure 120 is integrally formed on a surface that is of the polymer film body 121 and that is away from the transparent base 11. The nano array structure 120 is arranged at a single layer. An array periodicity of the nano array structure 120 is less than or equal to a wavelength of a target light ray. The target light ray is a light ray transmitted through the light-transmitting plate 100.

For example, the light ray may be visible light, or may be infrared light. In other words, "transparent" in embodiments of this disclosure means that the light-transmitting plate 100 can transmit visible light, infrared light, and the like.

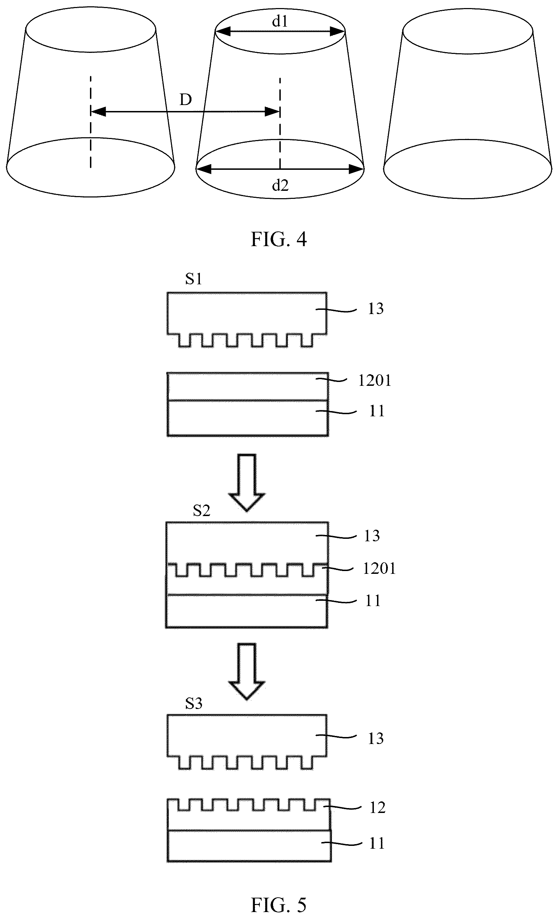

In the light-transmitting plate 100 provided in embodiments of this disclosure, the nano array structure 120 includes a plurality of sequentially arranged nanostructure units, and a center-to-center distance between any two adjacent nanostructure units is an array periodicity. FIG. 4 shows an example in which a center-to-center distance between any two adjacent nanostructure units is D, which indicates that an array periodicity of the nano array structure 120 is D.

According to the light-transmitting plate 100 provided in embodiments of this disclosure, the transparent base 11 is disposed to provide sufficient strength for the light-transmitting plate 100 and provide stable support for the transparent superhydrophobic layer 12. The transparent superhydrophobic layer 12 is of an integrated polymer film layer structure. The nano array structure 120 is integrally formed on the polymer film body 121, and can be stably attached to the transparent base 11 during polymer film molding, so that the transparent superhydrophobic layer 12 can be stably attached to the transparent base 11. The nano array structure 120 arranged at the single layer is disposed on the transparent superhydrophobic layer 12, so that the transparent superhydrophobic layer 12 has a stable superhydrophobic feature. This can effectively prevent water, dust carrying moisture, and the like from remaining on or adhering to the transparent superhydrophobic layer 12. In addition, a design of the nano array structure 120 can further effectively reduce a contact area between the transparent superhydrophobic layer 12 and water, dust carrying moisture, and the like, to further reduce adhesion of the water, the dust carrying moisture, and the like to the transparent superhydrophobic layer 12, and provide self-cleaning effect for the light-transmitting plate 100. Further, the design of the nano array structure 120 arranged at the single layer provides some antireflective effect for the transparent superhydrophobic layer 12, and the array periodicity of the nano array structure 120 is less than or equal to the wavelength of the target light ray. In this way, when the target light ray with the specific wavelength is incident from the light-transmitting plate 100 at a specific angle, only zero-order scattering occurs, and scattering effect is effectively avoided, so that it can be ensured that the light-transmitting plate 100 has a high light transmittance and low haze, thereby implementing clear imaging.

It can be learned that because the light-transmitting plate 100 provided in embodiments of this disclosure has self-cleaning performance and optical imaging performance, the light-transmitting plate 100 can be used in a photosensitive apparatus, for example, used in a camera device as a window of a camera or as a window of a lens cover, so that the window has a self-cleaning feature, to avoid adhesion of dust carrying moisture, thereby keeping the window clean at all times, and ensuring clear imaging of the camera device.

For superhydrophobic performance of the light-transmitting plate 100 provided in embodiments of this disclosure, in some embodiments, a tested droplet contact angle of the transparent superhydrophobic layer 12 of the light-transmitting plate 100 is greater than 150°, and a tested droplet roll angle is less than 10°. In this way, an excellent superhydrophobic feature is presented, and excellent self-cleaning effect is achieved.

The superhydrophobic feature of the transparent superhydrophobic layer 12 in embodiments of this disclosure depends on both the nano array structure 120 and a material of the nano array structure 120. In some examples, a fluorine element is used to provide intrinsic hydrophobicity for the transparent superhydrophobic layer 12.

In some examples, the nano array structure 120 has a first content of the fluorine element, and the polymer film body 121 has a second content of the fluorine element. The first content is greater than 0, the second content is greater than or equal to 0, and the first content is greater than the second content. In other words, the nano array structure 120 has the fluorine element, and the polymer film body 121 may have the fluorine element or may not have the fluorine element. The content of the fluorine element included in the nano array structure 120 is greater than that of the fluorine element included in the polymer film body 121.

Due to a low surface feature of the fluorine element, the fluorine element migrates from an inside to a surface of the nano array structure 120 in a process of curing the polymer film, so that the fluorine element has a gradient distribution in the transparent superhydrophobic layer 12.

For example, the content of the fluorine element gradually increases from the inside of the nano array structure 120 to the surface of the nano array structure 120, in other words, there are a largest quantity of fluorine elements on the surface of the nano array structure 120, and the content of the fluorine element gradually decreases in a direction from an outer surface of the nano array structure 120 to the inside of the nano array structure 120, presenting a gradient change.

For example, an embodiment of this disclosure provides a light-transmitting plate, where a single-layer nano array structure 120 is disposed on a transparent superhydrophobic layer 12 of the light-transmitting plate, and a content of the fluorine element included on an upper surface that is of the nano array structure 120 and that is away from the polymer film body 121 is greater than or equal to 20 atm%, for example, 20 atm% to 40 atm%. A content of the fluorine element included at a position that is of the nano array structure 120 and that is 50 nm from the surface (that is, a depth) is greater than or equal to 2 atm%, for example, 2 atm% to 20 atm%. The depth indicates a size in a direction extending from the upper surface of the nano array structure 120 as a start point to a transparent base 11.

In the foregoing distribution of the fluorine element in the transparent superhydrophobic layer 12, the fluorine element exists both on the surface and near the surface (for example, a 50 nm deep position) of the transparent superhydrophobic layer 12. This helps improve wear resistance and scratch resistance performance of the transparent superhydrophobic layer 12. Even if the surface of the nano array structure 120 is worn out, a newly exposed surface still has hydrophobicity to some extent.

In this embodiment of this disclosure, the nano array structure 120 is directly formed on the polymer film body 121. This improves hydrophobicity, and further helps simplify a preparation process of the nano array structure 120. For example, the preparation process may be a nanoimprinting process.

In some implementations, the transparent superhydrophobic layer 12 is prepared on the transparent base 11 by using a first raw material through the nanoimprinting process. The first raw material includes a hydrophobic substance. For another example, the hydrophobic substance includes a fluorine-containing polymer. For example, the fluorine-containing polymer is a perfluoropolyether.

As shown above, the first raw material may be used to perform one-time nanoimprinting to form the transparent superhydrophobic layer 12 having the nano array structure 120. For example, the hydrophobic substance includes the fluorine-containing polymer. In this example, the fluorine element is mixed into the transparent superhydrophobic layer 12, and the fluorine element exists both on the surface and near the surface (for example, the 50 nm deep position) of the transparent superhydrophobic layer 12. This helps improve the wear resistance and scratch resistance performance of the transparent superhydrophobic layer 12. Even if the surface of the transparent superhydrophobic layer 12 is worn out, the newly exposed surface still has hydrophobicity to some extent.

In some other implementations, an intermediate film layer having the nano array structure 120 is prepared on the transparent base 11 by using a second raw material through the nanoimprinting process; and the nano array structure 120 is modified by using a hydrophobic substance, and the transparent superhydrophobic layer 12 is prepared. For another example, the hydrophobic substance includes a fluorine-containing polymer. For example, the fluorine-containing polymer is a perfluoropolyether.

As shown above, the second raw material may not include the hydrophobic substance. The second raw material may be used to first form the intermediate film layer having the nano array structure 120 through nanoimprinting, and then the nano array structure 120 on the intermediate film layer is modified by using the hydrophobic substance, to provide a superhydrophobic feature for the intermediate film layer.

In some examples, the hydrophobic substance is a fluorine-containing polymer, for example, including but not limited to a perfluoropolyether, polytetrafluoroethylene, 1H,1H,2H,2H-perfluorodecyltriethoxysilane, perfluorooctane sulfonate, and perfluorodecylsilane.

In some implementations, as shown in FIG. 2, the transparent base 11 includes a first base layer 111, and the transparent superhydrophobic layer 12 is formed on a surface of the first base layer 111.

The first base layer 111 may be transparent glass, or may be a transparent polymer sheet.

In some examples, the first base layer 111 is the transparent glass, for example, including but not limited to tempered glass, optical glass, borate glass, and quartz glass.

In some other examples, the first base layer 111 is a transparent polymer film. For example, a material of the transparent polymer includes but is not limited to a polyethylene terephthalate (Polyethylene Terephthalate, PET) film, a polycarbonate (Polycarbonate, PC) film, a polymethyl methacrylate (Polymethyl Methacrylate, PMMA) film, a triacetyl cellulose (Triacetyl Cellulose, TAC) film. The polymethyl methacrylate is also referred to as acrylic glass.

In some other implementations, as shown in FIG. 3, the transparent base 11 includes a second base layer 112 and a third base layer 113. The third base layer 113 is attached to the second base layer 112, and the transparent superhydrophobic layer 12 is formed on a surface that is of the third base layer 113 and that is away from the second base layer 112.

The second base layer 112 is different from the third base layer 113. The third base layer 113 can be attached to the second base layer 112 in a manner such as adherence. The two base layers are disposed to facilitate replacement.

In some examples, a thickness of the third base layer 113 is less than that of the second base layer 112. In this way, the transparent base 11 may be first formed on the third base layer 113 for storage. During use, the third base layer 113 is attached to the second base layer 112 to facilitate replacement. Alternatively, in some application scenarios with a base, the base may be considered as the second base layer 112. In this way, only the third base layer 113 needs to be attached to the original base, to implement application of the transparent plate with a self-cleaning function in the application scenarios.

In some examples, the second base layer 112 is transparent glass, for example, including but not limited to tempered glass, optical glass, borate glass, and quartz glass.

In some other examples, the third base layer 113 is a transparent polymer sheet. For example, a material of the transparent polymer includes but is not limited to a polyethylene terephthalate (Polyethylene Terephthalate, PET) film, a polycarbonate (Polycarbonate, PC) film, a polymethyl methacrylate (Polymethyl Methacrylate, PMMA) film, a triacetyl cellulose (Triacetyl Cellulose, TAC) film.

In embodiments of this disclosure, the nano array structure 120 of the transparent superhydrophobic layer 12 includes a plurality of nanostructure units. The nanostructure unit is in a protrusion shape, and the plurality of nanostructure units provide a nano-level rough concave-convex shape for a surface of the transparent superhydrophobic layer 12.

A shape of the nanostructure unit may be of a regular geometric structure, or may be of an irregular geometric structure. Both the structures can achieve superhydrophobic effect. The following describes an example in which the nanostructure unit is of a regular geometric structure. Structures of the plurality of nanostructure units include at least one of a columnar shape, a columnar like shape, a truncated cone shape, a truncated cone like shape, a conical shape, a conical like shape, a needle shape, or a needle like shape.

The nanostructure unit of the foregoing structure provides more excellent hydrophobicity for the nano array structure 120, facilitates preparing the nano array structure 120 and controlling the array periodicity of the nano array structure, and provides some antireflective effect for the transparent superhydrophobic layer 12, so that the scattering effect is avoided while a light transmittance is ensured, and low haze and clear imaging are implemented.

In some examples, when a structure of the nanostructure unit is designed as a structure in a columnar shape, a columnar like shape, a truncated cone shape, a truncated cone like shape, a conical shape, a conical like shape, a needle shape, a needle like shape, or the like, a haze value of the transparent plate provided in embodiments of this disclosure is measured to be less than or equal to 2%, and a light transmittance of the transparent plate is greater than or equal to 88%, or even as high as 93% and 94%.

In embodiments of this disclosure, a position of the transparent superhydrophobic layer 12 is defined as upper, and correspondingly, a position of the transparent base 11 is defined as lower. An upper surface of each nanostructure unit is exposed to an outside, and a lower surface of each nanostructure unit is connected to the polymer film body 121 of the transparent superhydrophobic layer 12. A side surface that is of each nanostructure unit and that is located between the upper surface and the lower surface of the nanostructure unit is also exposed to the outside. Compared with the side surface of each nanostructure unit, the upper surface of each nanostructure unit has a higher probability of contacting water, dust carrying moisture, or the like in the outside.

In some examples, a surface of a nanostructure unit is a smooth surface, and the surface of the nanostructure unit includes at least one of an upper surface and a side surface of the nanostructure unit.

In some examples, there is a nano-level rough structure on the surface of the nanostructure unit. The surface of the nanostructure unit includes at least one of the upper surface and the side surface of the nanostructure unit. A size of the rough structure is in a nano scale. This helps enhance hydrophobicity of the nanostructure unit.

If the nanostructure unit is defined as a first-level rough structure, the rough structure on the surface of the nanostructure unit is a second-level rough structure. As roughness of the rough structure increases, the nanostructure unit has a stronger superhydrophobic feature.

Based on a Cassie-Baxter condition, $\cos\theta = \varphi_s \cos\theta_0 - (1-\varphi_s)$, where $\theta_0$ is an intrinsic contact angle of a material, $\varphi_s$ is a liquid-solid interface area ratio, and $\theta$ is a contact angle of the material. It can be seen that if $\theta \geq 150°$, the liquid-solid interface area ratio $\varphi_s$ needs to be less than a specific threshold. The liquid-solid interface area ratio indicates a ratio of a solid-liquid contact area to a sum of the solid-liquid contact area and a liquid-gas contact area.

For example, if the transparent superhydrophobic layer 12 is prepared by using a first raw material whose intrinsic contact angle $\theta_0 \geq 100°$, and $\theta \geq 150°$, the liquid-solid interface area ratio $\varphi_s$ merely needs to be less than or equal to 16.2%. If the transparent superhydrophobic layer 12 is prepared by using a first raw material whose intrinsic contact angle $\theta_0 > 120°$, and $\theta \geq 150°$, the liquid-solid interface area ratio $\varphi_s$ merely needs to be less than or equal to 26.8%.

Because the intrinsic contact angle of the first raw material usually does not exceed 120°, a ratio of an area of the upper surface of the nano array structure 120 (a solid-liquid contact area in an ideal state) to an area of a plane in which the nano array structure 120 is located (a sum of the solid-liquid contact area and a liquid-gas contact area in the ideal condition) may be less than or equal to 30%, for example, further less than or equal to 28%, 25%, 23%, 22%, 21%, 20%, 18%, 17%, 16%, 15%, 10%, 9%, 7%, 6%, 5%, 4%, 3%, or 2%, to implement the superhydrophobic performance, thereby ensuring the superhydrophobic feature of transparent superhydrophobic layer 12.

The upper surface herein indicates a surface that is of the nano array structure 120 and that contacts liquid or impurities including liquid. Correspondingly, the plane in which the nano array structure 120 is located includes lower surfaces of the plurality of nanostructure units included in the nano array structure 120 and a surface on which a gap between any two adjacent nanostructure units is located.

The area of the upper surface of the nano array structure 120 indicates a sum of areas of upper surfaces of the plurality of nanostructure units included in the nano array structure 120. The area of the plane in which the nano array structure 120 is located indicates a sum of areas of the lower surfaces of the plurality of nanostructure units included in the nano array structure 120 and an area of the gap between any two adjacent nanostructure units.

FIG. 4 is a side view of a nano array structure 120 including a plurality of nanostructure units in truncated cone shapes. It can be seen from the side view that a diameter of an upper surface of each nanostructure unit is d1, a diameter of a lower surface of each nanostructure unit is d2, and a gap between any two adjacent nanostructure units, that is, an array periodicity of the nano array structure 120, is D. A ratio of an area of an upper surface of the nano array structure 120 may be calculated based on d1, d2, and D.

In this embodiment of this disclosure, the array periodicity D of the nano array structure 120 is less than or equal to a wavelength of a target light ray. For example, if the target light ray is visible light with a wavelength of 400 nm, the array periodicity D of the nano array structure 120 needs to be less than or equal to 400 nm. In this way, only zero-order diffraction occurs on light transmitted through a light-transmitting plate 100 at a specific incident angle, and imaging is not affected.

In some implementations, the nano array structure 120 includes the plurality of nanostructure units, a ratio of an average diameter of the nanostructure units to the wavelength of the target light ray is 1:40 to 1:2, and a ratio of a height of the nanostructure units to the wavelength of the target light ray is 1:10 to 1:1.

For example, the ratio of the diameter of the nanostructure units to the wavelength of the target light ray includes but is not limited to 1:40, 1:35, 1:30, 1:25, 1:20, 1:18, 1:15, 1:13, 1:11, 1:10, 1:8, 1:5, 1:4, and 1:3.

The ratio of the height of the nanostructure units to the wavelength of the target light ray includes but is not limited to 1:10, 1:9, 1:8, 1:7, 1:6, 1:5, 1:4, 1:3, 1:2, and 1:1.

A smaller height and a larger diameter of the nanostructure units indicate stronger wear resistance and friction resistance of the nanostructure units. However, this may correspondingly reduce superhydrophobic performance of the nanostructure units. On the contrary, a greater height and a smaller diameter of the nanostructure units help improve superhydrophobic performance of the nanostructure units, but are not conducive to wear resistance and scratch resistance performance of the nanostructure units. In this embodiment of this disclosure, the diameter and the height of the nanostructure unit are controlled within a specific range, so that excellent superhydrophobic performance, wear resistance, and scratch resistance can be achieved.

In addition, an embodiment of this disclosure further provides a method for preparing a light-transmitting plate. The light-transmitting plate is shown in any one of the foregoing implementations, and the method for preparing the light-transmitting plate includes: A transparent superhydrophobic layer is prepared on a transparent base by using a nanoimprinting process. A nano array structure arranged at a single layer on the transparent superhydrophobic layer is formed by a nano array mold.

Refer to FIG. 5. In some examples, the method for preparing the light-transmitting plate includes the following steps.

Provide a first raw material including a hydrophobic substance, and liquefy the first raw material to obtain a first raw material liquid.

Coat the first raw material liquid on a transparent base 11 to form a first liquid film 1201 on the transparent base (refer to S1 in FIG. 5).

Imprint a nano array mold 13 on the first liquid film 1201, and cure the first liquid film 1201, to form a transparent superhydrophobic layer 12 (refer to S2 in FIG. 5).

Demold the transparent superhydrophobic layer 12 from the nano array mold 13 to obtain the light-transmitting plate 100 (refer to S3 in FIG. 5).

In some other examples, the method for preparing the light-transmitting plate includes the following steps.

Provide a second raw material and a hydrophobic substance, and liquefy the second raw material to obtain a second raw material liquid.

Coat the second raw material liquid on a transparent base to form a second liquid film on the transparent base.

Imprint a nano array mold on the second liquid film, and cure the second liquid film to form a nano array structure layer.

Demold the nano array structure layer from the nano array mold.

Graft the hydrophobic substance on the nano array structure layer to form a transparent superhydrophobic layer, to obtain the light-transmitting plate.

In this example, the steps from forming the liquid film to demolding are consistent with the procedure shown in FIG. 5, and a difference lies in that the used second raw material liquid is different from the first raw material liquid.

The methods for preparing the light-transmitting plates all involve imprinting the nano array molds on the corresponding liquid films, to form corresponding nano array structure layers. This process may be referred to as nanoimprinting for short. For a nanoimprinting procedure in embodiments of this disclosure, refer to FIG. 5. S1 shows an example in which a corresponding raw material liquid is coated on a transparent base, and a corresponding liquid film is formed on the transparent base. S2 shows an example in which a nano array mold is imprinted on the liquid film, and the liquid film is cured to form a nano array structure layer. S3 shows an example in which the nano array structure layer is demolded from the nano array mold.

For the transparent superhydrophobic layer prepared by using the first raw material, the first raw material is a curable hydrophobic composite, and a curing manner of the first raw material may be photocuring or heat curing. The photocurable hydrophobic composite may be applied to embodiments of this disclosure based on its advantages such as short curing time, high production efficiency, and small curing deformation.

In some examples, the curable hydrophobic composite includes at least an acrylic monomer, a hydrophobic substance, a photoinitiator, a cross-linking agent, and a solvent, and may further include an additive. The additive includes but is not limited to a leveling agent, a toughening agent, and a stabilizer.

In some examples, the curable hydrophobic composite includes components of the following mass percentages: 20% to 90% acrylate monomer or resin, 1% to 10% hydrophobic substance, 1% to 5% photoinitiator, 5% to 35% cross-linking agent, and the balance solvent.

For example, the mass percentage of the acrylate monomer or resin includes but is not limited to 30%, 40%, 50%, 55%, 60%, 65%, 70%, 75%, 80%, and 85%.

The mass percentage of the hydrophobic substance includes but is not limited to 1%, 2%, 3%, 4%, 5%, 6%, 7%, 8%, and 9%.

The mass percentage of the photoinitiator includes but is not limited to 1%, 1.5%, 2%, 2.5%, 3%, 3.5%, 4%, and 4.5%.

The mass percentage of the cross-linking agent includes but is not limited to 5%, 10%, 15%, 20%, 25%, 30%, and 35%.

For example, the acrylate monomer or resin includes but is not limited to at least one of an aliphatic acrylate monomer, an aliphatic carbamate acrylate resin, a polyether-based polyurethane acrylate resin, polyester-based polyurethane acrylate resin, an epoxy acrylate resin, and a polybutadiene acrylate resin.

The photoinitiator includes but is not limited to at least one of α-hydroxyketone, diphenyl(2,4,6-trimethylbenzoyl)phosphine oxide, ethyl (2,4,6-trimethylbenzoyl) phenylphosphinate, 2-methyl-4-(methylthio)-2-morpholinopropiophenone, 2-isopropylthioxanthone, 2-hydroxy-2-methylpropiophenone, 2,4-bistrichloromethyl-6-p-methoxystyryl-s-triazine, 2-p-methoxystyryl-4,6-bistrichloromethyl-s-triazine, 2,4-trichloromethyl-6-triazine, benzophenone, p-(dimethylamino)benzophenone, 2,2-dichloro-4-phenoxyacetophenone, and p-tert-butylphenyl-trichloroethanone.

The cross-linking agent includes but is not limited to at least one of a vinyl compound and an acrylate compound.

The solvent includes but is not limited to at least one of ethylene glycol monomethyl ether acetate, propylene glycol monomethyl ether, propylene glycol monomethyl ether acetate, propylene glycol monoethyl ether acetate, diethylene glycol dimethyl ether, diethylene glycol methyl ethyl ether, butanone, cyclohexanone, ethyl 3-methoxypropionate, methyl 3-ethoxypropionate, ethyl 3-ethoxypropionate, methyl ethyl ketone, isopropanol, ethanol, and methanol.

Some applicable hydrophobic substances are fluorine-containing polymers, for example, including but not limited to perfluoropolyethers (Perfluoropolyethers, PFPE), polytetrafluoroethylene, 1H,1H,2H,2H-perfluorodecyltriethoxysilane, perfluorooctane sulfonate, and perfluorodecylsilane.

The acrylic monomer, the hydrophobic substance, the photoinitiator, and the cross-linking agent in the curable hydrophobic composite are dissolved in a solvent, to form a first raw material liquid. The first raw material liquid is coated on the transparent base to form a liquid film. The nano array mold is pressed under an action of specified force, so that the first raw material liquid is fully infiltrated into the nano array mold, and then a curing operation is performed.

In some examples, the curing operation is ultraviolet light curing. During the ultraviolet light curing, used ultraviolet light intensity is 100 mW/cm$^2$ to 1200 mW/cm$^2$, for example, 100 mW/cm$^2$, 200 mW/cm$^2$, 300 mW/cm$^2$, 400 mW/cm$^2$, 500 mW/cm$^2$, 600 mW/cm$^2$, 700 mW/cm$^2$, 800 mW/cm$^2$, 9000 mW/cm$^2$, 1000 mW/cm$^2$, or 1200 mW/cm$^2$. Illumination time is 2s to 20s, for example, 2s, 3s, 4s, 5s, 6s, 8s, 10s, 15s, or 20s. Higher power indicates shorter time.

Because the curable hydrophobic composite includes a hydrophobic substance, in a curing process of the hydrophobic composite, low surface energy of the fluorine-containing hydrophobic substance, for example, perfluoropolyether, may gradually migrate to a surface, so that a surface of the transparent superhydrophobic layer includes more fluorine elements, and the transparent superhydrophobic layer has a better superhydrophobic feature.

In some examples, the second raw material includes components of the following mass percentages: 20% to 90% acrylate monomer or resin, 1% to 5% photoinitiator, 5% to 30% cross-linking agent, and the balance solvent. Types of the acrylate monomer or resin, the photoinitiator, the cross-linking agent, and the solvent each may be the same as those in the first raw material. A difference lies in that the hydrophobic substance is grafted on a surface of the nano array structure through chemical modification.

For the methods for preparing the light-transmitting plate, the nano array mold is imprinted to form the nano array structure. The nano array mold has a nano array structure opposite to the nano array structure. During preparation, the nano array mold may directly form the reverse nano array structure on the nano array mold. Alternatively, a nano array structure (that is, a target nano array structure) expected in this disclosure may be first prepared, and then the nano array mold is prepared by using the target nano array structure as a mold by using a nanoimprinting process.

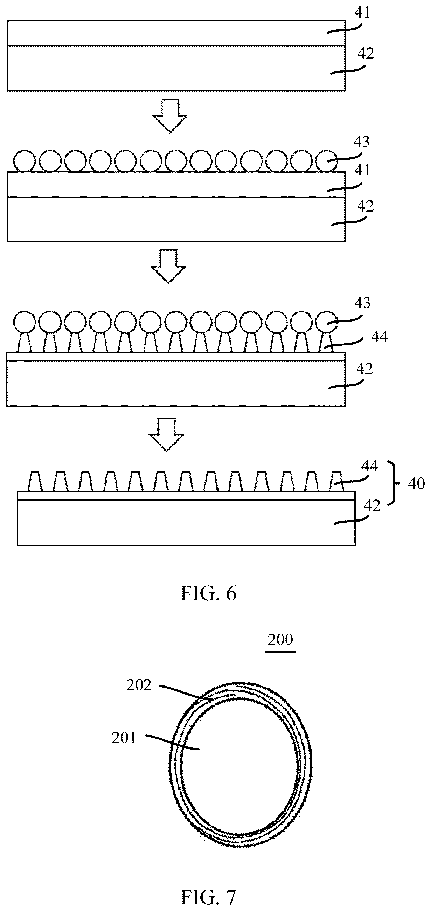

With reference to a procedure described in FIG. 6, the following describes an example in which a target nano array structure is used as a mold to transfer print and prepare a nano array mold. FIG. 6 shows a procedure of the following step 11 and step 12.

Step 11: Provide a first substrate 42 having an etching layer 41, and perform nano particle self-assembly on the etching layer 41 to form a nano particle template layer 43. Refer to first two steps in FIG. 6.

Step 12: Etch the etching layer 41 by using the nano particle template layer 43 as a template, to form a target nano array structure 44 on the etching layer 41 and form a reverse mold 40. Refer to last two steps in FIG. 6. The target nano array structure 44 is the nano array structure 120.

Step 13: Coat a curable liquid film on the second substrate, imprint the reverse mold on the curable liquid film, perform curing processing, and form the reverse nano array structure on the curable liquid film by using a nano transfer printing process.

Step 14: Perform demolding processing on the reverse mold to obtain the nano array mold.

A procedure shown in step 13 and step 14 is consistent with the procedure shown in FIG. 5, and a difference lies in that a new curable liquid film is provided, and a new reverse mold 40 is used.

For the step 11, the first substrate includes but is not limited to glass, a silicon sheet, a metal sheet, polyethylene terephthalate (Polyethylene Terephthalate, PET), polyimide (Polyimide, PI), polyurethane (Polyurethane, PU), polymethyl methacrylate (Polymethyl Methacrylate, PMMA), and polydimethylsiloxane (Polydimethylsiloxane, PDMS).

A material of the etching layer may be the same as a material of the first substrate. In this case, the etching layer and the first substrate are of an integrated block structure. Alternatively, a material of the etching layer may also be different from a material of the first substrate. In this case, the etching layer may be deposited on the first substrate.

In some examples, a raw material liquid corresponding to the etching layer is cured into a film through coating. A coating manner of the raw material liquid includes but is not limited to spin coating, scraping coating, slit coating, and screen printing. After the coating is completed, the film may be cured in a heat curing manner or a photocuring manner. A processing parameter of heat curing or photocuring may be determined based on a property of the raw material of the etching layer.

In some examples, raw material particles corresponding to the etching layer are cured into a film through thermal pressure, and processing parameters such as a temperature, time, and a pressure of the hot pressure may be determined based on a property of the raw material of the etching layer.

In some examples, the material of the etching layer may be an organic material, or may be an inorganic material, and includes but is not limited to epoxy resin, acrylic resin, polymethyl methacrylate, polyurethane, polyimide, $SiO_2$, and Si.

Nano particle self-assembly is performed on the etching layer to form a single-layer close packing film, to obtain a nano particle template layer. Some applicable nano particles include but are not limited to $SiO_2$ nanoballs, polystyrene nanoballs, and organic silicon nanoballs.

A diameter of a nano particle determines an array periodicity of the target nano array structure obtained by using the etching process, and the diameter of the nano particle is adaptively determined based on a requirement for the array periodicity. For example, for a visible light imaging camera, nano particles whose diameters are less than or equal to 400 nm may be selected.

In some examples, a material of the nano particle and the material of the etching layer are the same or belong to a same type. For example, $SiO_2$ nanoballs may correspond to a $SiO_2$ or a Si etching layer, and polystyrene nanoballs may correspond to an epoxy resin, acrylic resin, or other etching layer.

A method for forming the single-layer close packing film through nano particle self-assembling includes but is not limited to: a Langmuir-Blodgett (LB) film pulling technology, a spin coating method, a gravity settling method, and a pulling method. In an example of the LB method, an arrangement of the nano particle template layer may be optimized by adjusting parameters such as an extrusion speed, a pulling speed, a concentration of a nano particle solution, a type of a solvent, and a pulling surface pressure. In an example of the spin coating method, an arrangement of the nano particle template layer may be optimized by adjusting parameters such as a concentration of a nano particle solution, a type of a solvent, a spin coating speed, and spin coating time. In an example of the gravity settling method, an arrangement of the nano particle template layer may be optimized by adjusting parameters such as a concentration of a nano particle solution and a type of a solvent. In an example of the pulling method, an arrangement of the nano particle template layer may be optimized by adjusting parameters such as a concentration of a nano particle solution, a type of a solvent, and a pulling speed.

In some examples, after nano particle self-assembling, thermal rearrangement may be further performed, to optimize a close packing arrangement between nano particles. The thermal rearrangement may be performed by a hot plate or an oven, at a temperature of 25 °C to 50 °C, with time less than or equal to one hour.

In the step 12, the nano particle template layer is used as a template to etch the etching layer, to form the target nano array structure on the etching layer, and the nano particle template layer is removed to form the reverse mold.

The etching process may be plasma etching, and selection of an etching gas is determined based on anisotropic etching effect of the etching gas on a material of the etching layer. In some examples, the etching gas includes but is not limited to at least one of oxygen, nitrogen, argon, $CHCl_3$, $CF_4$, $SF_6$, and $CHF_3$.

In some examples, it is expected that a selected etching gas can produce the anisotropic etching effect on the etching layer, to obtain a nano-level secondary rough structure. For example, a polymethyl methacrylate film layer, an acrylic resin film layer, and an epoxy resin film layer each exhibit an anisotropic etching characteristic when oxygen or the like is used as an etching gas. In this way, the nano-level secondary rough structure is produced through etching.

For plasma etching, etching processing parameters such as etching power, etching time, a type of an etching gas, and a flux of the etching gas are adjusted to control a shape and a size of a nanostructure unit produced through etching.

For the step 13, the curable liquid film is coated on the second substrate, the reverse mold is imprinted on the curable liquid film, curing processing is performed, and the reverse nano array structure is formed on the curable liquid film by using the nano transfer printing process.

The curable liquid film may be prepared by using a photocurable composite. In this way, the curable liquid film can be cured by using an ultraviolet light curing process.

The photocuring composite includes at least an acrylic monomer, a photoinitiator, a cross-linking agent, and a solvent, and may further include an additive. The additive includes but is not limited to a leveling agent, a toughening agent, and a stabilizer.

In some examples, the photocuring composite includes components of the following mass percentages: 20% to 90% acrylate monomer or resin, 1% to 10% hydrophobic substance, 1% to 5% photoinitiator, 5% to 35% cross-linking agent, and the balance solvent.

For example, the mass percentage of the acrylate monomer or resin includes but is not limited to 30%, 40%, 50%, 55%, 60%, 65%, 70%, 75%, 80%, and 85%.

The mass percentage of the hydrophobic substance includes but is not limited to 1%, 2%, 3%, 4%, 5%, 6%, 7%, 8%, and 9%.

The mass percentage of the photoinitiator includes but is not limited to 1%, 1.5%, 2%, 2.5%, 3%, 3.5%, 4%, and 4.5%.

The mass percentage of the cross-linking agent includes but is not limited to 5%, 10%, 15%, 20%, 25%, and 30%.

For example, the acrylic monomer includes but is not limited to at least one of an aliphatic acrylate monomer, an aliphatic carbamate acrylate resin, a polyether-based polyurethane acrylate resin, polyester-based polyurethane acrylate resin, an epoxy acrylate resin, and a polybutadiene acrylate resin.

The photoinitiator includes but is not limited to at least one of $\alpha$-hydroxyketone, diphenyl(2,4,6-trimethylbenzoyl)phosphine oxide, ethyl (2,4,6-trimethylbenzoyl) phenylphosphinate, 2-methyl-4-(methylthio)-2-morpho-linopropiophenone, 2-isopropylthioxanthone, 2-hydro-xy-2-methylpropiophenone, 2,4-bistrichloromethyl-6-p-methoxystyryl-s-triazine, 2-p-methoxystyryl-4,6-bistrichloromethyl-s-triazine, 2,4-trichloromethyl-6-triazine, benzophenone, p-(dimethylamino)benzophenone, 2,2-dichloro-4-phenoxyacetophenone, and p-tert-butylphenyl-trichloroethanone.

The cross-linking agent includes but is not limited to at least one of a vinyl compound and an acrylate compound.

The solvent includes but is not limited to at least one of ethylene glycol monomethyl ether acetate, propylene glycol monomethyl ether, propylene glycol monomethyl ether acetate, propylene glycol monoethyl ether acetate, diethylene glycol dimethyl ether, diethylene glycol methyl ethyl ether, butanone, cyclohexanone, ethyl 3-methoxypropionate, methyl 3-ethoxypropionate, ethyl 3-ethoxypropionate, methyl ethyl ketone, isopropanol, ethanol, and methanol.

During the photocuring, used ultraviolet light intensity may be 100 mW/cm$^2$ to 1200 mW/cm$^2$, for example, 100 mW/cm$^2$, 200 mW/cm$^2$, 300 mW/cm$^2$, 400 mW/cm$^2$, 500 mW/cm$^2$, 600 mW/cm$^2$, 700 mW/cm$^2$, 800 mW/cm$^2$, 9000 mW/cm$^2$, 1000 mW/cm$^2$, or 1200 mW/cm$^2$. Illumination time is 2s to 20s, for example, 2s, 3s, 4s, 5s, 6s, 8s, 10s, 15s, or 20s. Higher power indicates shorter time.

For the step 14, demolding processing is performed on the reverse mold to obtain the nano array mold. To facilitate demolding, a surface of the target nano array structure of the reverse mold may be modified by using a fluorine-containing substance, so that the surface of the target nano array structure of the reverse mold has low surface energy, thereby facilitating demolding of the reverse mold. For example, the fluorine-containing substance may be poly(vinylidene fluoride) or the like.

In conclusion, the light-transmitting plate provided in embodiments of this disclosure has the superhydrophobic performance, the good light transmission performance, and good mechanical performance. The nano array structure is disposed on the transparent superhydrophobic layer, so that the transparent superhydrophobic layer has a stable superhydrophobic feature. This can effectively prevent water, dust carrying moisture, and the like from remaining on or adhering to the transparent superhydrophobic layer. In addition, a design of the nano array structure can further effectively reduce a contact area between the transparent superhydrophobic layer and water, dust carrying moisture, and the like, to further reduce adhesion of the water, the dust carrying moisture, and the like to the transparent superhydrophobic layer, and provide self-cleaning effect for the light-transmitting plate.

When the light-transmitting plate is used in a harsh environment such as a mine, effective dustproof and waterproof performance can be implemented, and coal dust adhesion can be effectively avoided, thereby achieving the self-cleaning effect.

Further, the nano array structure provides some antireflective effect, and the array periodicity of the nano array structure is less than or equal to the wavelength of the target light ray. In this way, when the target light ray with the specific wavelength is incident from the light-transmitting plate, only zero-order scattering occurs, and scattering effect is avoided, so that it can be ensured that the light-transmitting plate has a sufficient light transmittance, and haze is reduced, thereby implementing clear imaging.

Compared with a hydrophobic coating solution in which hydrophobic nano particles are connected and packed to form a micro-nano structure, in the light-transmitting plate solution in this disclosure, preparation is easier, and a high light transmittance and low haze can be implemented by designing and easily controlling the nano array structure, thereby implementing clear imaging.

Compared with a solution in which a hydrophobic nanostructure is directly etched on glass, in the light-transmitting plate solution in this disclosure, preparation is easier, the process is simple, the nano array mold may be repeatedly used, and the nano array structure is obtained through one-time imprinting molding. In addition, in the glass etching solution, a modified fluorine-containing hydrophobic compound exists on a surface only. However, in the light-transmitting plate solution of this disclosure, the fluorine-containing hydrophobic compound exists on the surface and near the surface at a specific depth. This is more conducive to improving wear resistance performance of a transparent superhydrophobic coating, because even if fluorine-containing molecules on the surface are worn out, a near surface of the transparent superhydrophobic coating is exposed and there are still fluorine-containing molecules providing low surface energy. In this way, the surface of the transparent superhydrophobic coating still has superhydrophobic performance after being worn out. In addition, glass has high fragility, and brittle rupture may easily occur in a nanostructure under wear and impact due to external force. However, a polymer has specific elasticity and toughness, can reversibly bend and deform under external force, and has better wear resistance.

Further, an embodiment of this disclosure further provides a mechanical part 200. As shown in FIG. 7, the mechanical part 200 includes a window portion 201 and a side frame portion 202. The side frame portion 202 is disposed around an outer side of the window portion 201. The window portion 201 is prepared by using any one of the foregoing light-transmitting plates 100.

The mechanical part 200 provided in this embodiment of this disclosure has all advantages of the light-transmitting plate 100 according to this disclosure. The mechanical part 200 may be used in any field that has a light transmission requirement. For example, the mechanical part 200 may be used in the fields such as image shooting or optical signal collection, for example, scenarios with a high self-cleaning requirement, such as a camera, a sensor, or radar.

The window portion 201 is transparent and visible, and has a high light transmittance, thereby presenting excellent light transmission effect. A shape of the window portion 201 is adaptively determined based on a specific type of the mechanical part 200. For example, the shape of the window portion 201 may be a regular geometric shape, for example, a circle, an ellipse, a rectangle, or a hexagon, or may be an irregular geometric shape.

In some examples, as shown in FIG. 7, the side frame portion 202 is disposed around the outer side of the window portion 201, and an assembly manner between the side frame portion 202 and the window portion 201 includes but is not limited to insertion and clamping.

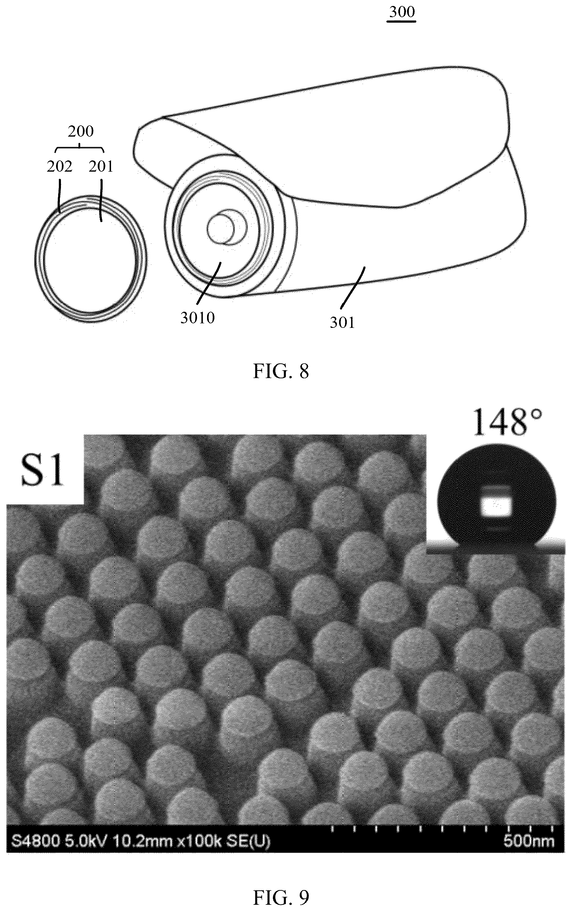

The side frame portion 202 is disposed around the outer side of the window portion 201 and can be connected to a device body 301, so that the mechanical part 200 is stably assembled on the device body 301 (with reference to FIG. 8). The device body 301 is a device body that matches the mechanical part 200.

The mechanical part 200 is assembled on the device body 301. The mechanical part 200 can protect a corresponding component on the device body 301 based on the transparent and visible feature of the mechanical part 200, so that the component is first visible. Further, if the component has an imaging function, in this case, when the mechanical part 200 protects the component, normal light transmission performance of the component is not affected. For example, when the mechanical part 200 is used in an imaging apparatus, imaging is clear.

In some examples, a shape of the side frame portion 202 includes but is not limited to a circle, an ellipse, a rectangle, and a hexagon.

In some examples, the side frame portion 202 is a frame body with a cavity. One end of the side frame portion 202 in an axial direction of the cavity is connected to the window portion 201, and the other end of the side frame portion 202 in the axial direction of the cavity is connected to the device body 301. When the mechanical part 200 includes both the window portion 201 and the side frame portion 202, it may be considered that the mechanical part 200 is in a shape of a cover body. In this way, a corresponding component on the device body 301 is sealed in the inner cavity of the side frame portion 202, thereby effectively preventing contamination of water, dust, and the like.

The side frame portion 202 and the device body 301 may be fastened to each other, for example, welded or bonded to each other, or the side frame portion 202 and the device body 301 may be detachably connected to each other. In some examples, the side frame portion 202 has a connection structure. The connection structure is configured to detachably connect the side frame portion 202 to a device body 301. In this way, the mechanical part 200 is detachable. Once performance of the window portion 201 of the mechanical part 200 does not meet a requirement, the mechanical part 200 can be conveniently replaced with a new mechanical part 200 to match the device body 301, thereby improving a service life of the device body 301.

For example, the connection structure is a threaded structure, a clamping structure, or a riveting structure. For example, the connection structure is a threaded structure. The side frame portion 202 may have a cylindrical inner cavity, an inner thread is disposed on an inner wall of the side frame portion 202, and an adapted outer thread is disposed at a corresponding position on the device body 301. A threaded connection manner has advantages such as easy disassembly and assembly, and has excellent sealing performance, to effectively prevent dust and the like from entering an interior. The threaded connection manner is especially applicable to a scenario with a harsh environment, for example, a coal mine well.

Moreover, an embodiment of this disclosure further provides an apparatus. The apparatus includes any one of the mechanical parts 200 in this disclosure. The mechanical part 200 has at least self-cleaning and protection functions in the apparatus.

For example, for some display or instrument apparatuses, the mechanical part 200 may be used as an external screen, and such an apparatus maintains a clear display function at all times based on a good self-cleaning feature of the mechanical part 200. For some photosensitive apparatuses 300, the mechanical part 200 may be used as a window screen, to achieve a good self-cleaning function and a clear imaging function.

In some examples, as shown in FIG. 8, an embodiment of this disclosure provides a photosensitive apparatus 300. The photosensitive apparatus 300 includes any one of the mechanical parts 200 in embodiments of this disclosure.

In some examples, the photosensitive apparatus 300 further includes a device body 301. The device body 301 has a light-transmitting portion 3010. The mechanical part 200 is connected to the device body 301, and the window portion 201 of the mechanical part 200 is opposite to the light-transmitting portion 3010.

When the mechanical part 200 is used in the photosensitive apparatus 300, the mechanical part 200 may be considered as a protective cover. The mechanical part 200 is disposed to protect the light-transmitting portion 3010 of the device body 301 and ensure that the light-transmitting portion 3010 does not scatter light.

For example, the photosensitive apparatus 300 includes but is not limited to an image shooting apparatus or a laser radar apparatus. The image shooting apparatus is used as an example. The device body 301 of the image shooting apparatus may be a camera. The light-transmitting portion 3010 of the camera is a lens, and the mechanical part 200 may be a lens cover. The mechanical part 200 may be connected to the lens (that is, the light-transmitting portion 3010) by using the side frame portion 202, and the window portion 201 is opposite to a window of the lens (the window portion 201 is located on an outer side of the window of the lens), to implement protection and self-cleaning for the lens, without affecting clear imaging of the lens.

In some examples, an embodiment of this disclosure provides such a camera apparatus. As shown in FIG. 8, the camera apparatus includes a mechanical part 200 (that is, a lens cover) and a device body 301 (that is, a camera) that each have an inner thread connection structure. The mechanical part 200 (the lens cover) is connected to a light-transmitting portion 3010 of the device body 301 (the camera). A window portion 201 of the mechanical part 200 (the lens cover) is circular, and the window portion 201 is opposite to a window of the device body 301 (the camera). Further, an outer sidewall of the light-transmitting portion 3010 of the device body 301 (the camera) has an outer thread, and an inner sidewall of the side frame portion 202 of the mechanical part 200 (the lens cover) has an inner thread, so that the device body 301 and the mechanical part 200 are connected through threads.

The window portion 201 of the lens cover is prepared by using the light-transmitting plate 100 described in embodiments of this disclosure. The lens cover has excellent self-cleaning effect, and can ensure clear imaging. In addition, based on the inner thread connection structure of the lens cover, the lens cover has excellent sealing performance and can be easily replaced, so that a problem that a service life of an ultra-think material is short and does not match a service life of a camera can be resolved. Self-cleaning of the photosensitive apparatus 300 is implemented by disposing the transparent superhydrophobic layer 12. Compared with introducing an additional mechanical cleaning mechanism into the photosensitive apparatus 300, the manners in this disclosure are easy to operate, to deploy, and to implement camera miniaturization, require low costs, and have better self-cleaning effect.

In some examples, to obtain an expected angle of view $\alpha$, a diameter D of the window portion 201 and a distance d between the window portion 201 and the window (that is, the light-transmitting portion 3010) of the lens meet the following relationship: $D \geq 2d\tan(\alpha/2)$ $D$

$$\geq 2d\tan(\frac{\alpha}{2}).$$

In some examples, the photosensitive apparatus 300 provided in this embodiment of this disclosure further includes a cleaning mechanism (not shown in the figure). The cleaning mechanism is connected to the device body 301, and the cleaning mechanism is configured to clean the window portion 201 on the cover body.

The cleaning mechanism includes but is not limited to a water spraying mechanism, an ultrasonic vibration mechanism, and an air exhaust mechanism. Once the window portion 201 on the cover body has dirt that cannot be removed through self-cleaning, the dirt may be cleaned in cooperation with the cleaning mechanism, to ensure that the window portion 201 remains clean and transparent at all times, and implement complete self-cleaning of the photosensitive apparatus 300.

The following further describes this disclosure by using more specific embodiments. Although the following describes some specific implementations, it should be understood that this disclosure may be implemented in various forms and should not be limited by the embodiments described herein. If no specific technologies or conditions are specified in the embodiments, technologies or conditions described in documents in the art or product specifications shall apply, and no manufacturer is specified for any used reagent or instrument, the reagent or instrument may be a conventional product that can be obtained through market purchase.

Embodiment 1

Embodiment 1 provides a light-transmitting plate, and the light-transmitting plate is prepared by using the following method:

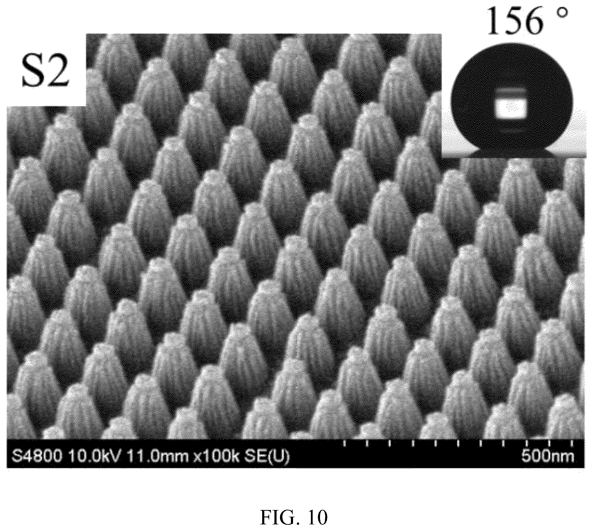

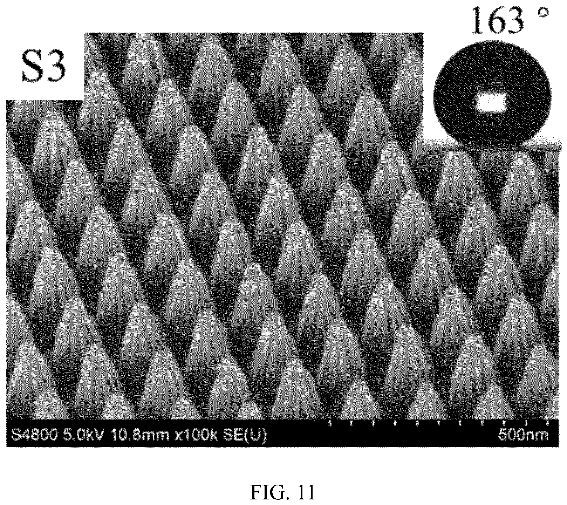

providing a first substrate having an etching layer, where the first substrate is glass, the etching layer is a 1-micrometer-thick epoxy resin layer; spin coating an epoxy resin solution on a glass base at a rate of 3000 rpm for 1 min; and then baking the coated glass base at 95 °C for 1 min;
self-assembling polystyrene nanoball on a surface of the etching layer by using an LB film pulling process, to form a nano particle template layer, where a diameter of the polystyrene nanoball is 200 nm, an extrusion speed and a pulling speed are 5 mm/min, and a surface pressure is set to 10 mN/m;
etching the etching layer through oxygen plasma etching by using the polystyrene nanoball as an etching template, to form a target nano array structure on the etching layer and form a reverse mold, where
FIG. 9 to FIG. 11 show three types of reverse molds, etching time corresponding to the reverse mold S1 shown in FIG. 9 is 20s, etching time corresponding to the reverse mold S2 shown in FIG. 10 is 30s, etching time corresponding to the reverse mold S3 shown in FIG. 11 is 40s, it can be seen that longer etching time indicates higher roughness of a nanostructure unit of the target nano array structure of the reverse mold and a more obvious anisotropic etching feature, so that a nano-level secondary rough structure is produced on a surface of the nanostructure unit, and according to a test, water contact angles of the reverse mold S1, the reverse mold S2, and the reverse mold S3 are 148°, 156°, and 163°, respectively;

modifying the target nano array structure on the reverse mold S3 by using a fluorine-containing substance, coating a curable liquid film on a second substrate, imprinting the reverse mold S3 on the curable liquid film, illuminating the imprinted curable liquid film for 10s at an ultraviolet light intensity of 150 $mW/cm^2$ for curing, and further forming the reverse nano array structure on the curable liquid film by using a nano transfer printing process, where

the second substrate is a polyethylene terephthalate base, the curable liquid film is prepared by using a photocurable composite, and the photocurable composite includes components of the following mass percentages: 50% 1,6-hexanediol diacrylate, 35% trimethylolpropane triacrylate, 5% irgacure-184, and 10% butanone;

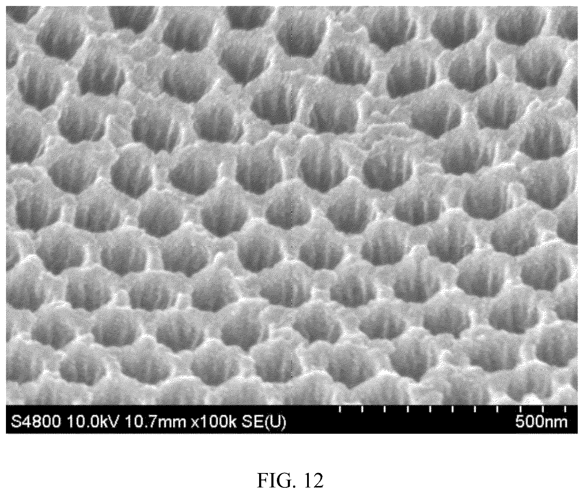

performing demolding processing on the reverse mold S3, to obtain a nano array mold, where for a scanning electron micrograph of the nano array mold, refer to FIG. 12;

liquefying a first raw material to obtain a first raw material liquid, where the first raw material includes components of the following mass percentages: 50% 1,6-hexanediol diacrylate, 35% trimethylolpropane triacrylate, 5% irgacure-184, 2% perfluoropolyether acrylate, and 8% butanone;

coating the first raw material liquid on a transparent base to form a first liquid film on the transparent base, where the transparent base is a polyethylene terephthalate (PET) film; and

imprinting the nano array mold on the first liquid film, illuminating the imprinted first liquid film at an ultraviolet light intensity of 200 $mW/cm^2$ for 10s, so that the first liquid film is cured to form a transparent superhydrophobic layer, and demolding the transparent superhydrophobic layer from the nano array mold to obtain the light-transmitting plate.

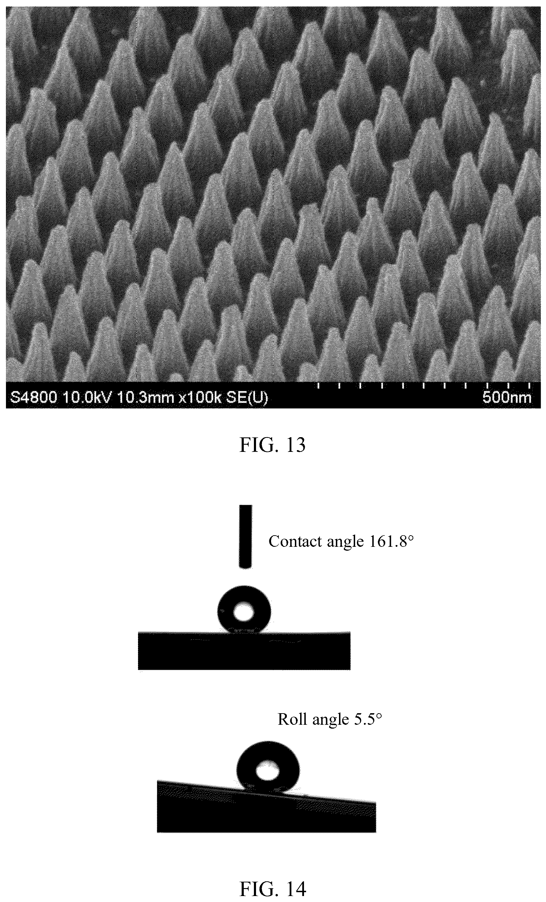

For the prepared light-transmitting plate, a scanning electron micrograph of the transparent superhydrophobic layer on the light-transmitting plate is shown in FIG. 13. A nano array structure is shown in the figure. An array periodicity of the nano array structure is 200 nm. A nanostructure unit is in a conical shape, and a diameter of an upper surface of the nanostructure unit is 30 nm to 40 nm, a diameter of a lower surface of the nanostructure unit is 80 nm to 110 nm, and a height is 170 nm to 200 nm. A ratio of an area of an upper surface of the nano array structure to an area of a plane in which the nano array is located is about 2% to 3.6%.

An intrinsic contact angle (that is, a water contact angle measured by pressing the first liquid film into a planar film without a nanostructure, and after curing) of this transparent superhydrophobic material is 105°. In this case, theoretical calculation is performed according to a Cassie-baxter equation, a water contact angle of the transparent superhydrophobic layer should be 166.6° to 170°. Actually, a measured contact angle of the transparent superhydrophobic layer is 161.8°, and a measured roll angle is 5.5° (refer to FIG. 14), which are basically consistent with theoretical values, indicating that the transparent superhydrophobic layer has a superhydrophobic feature.

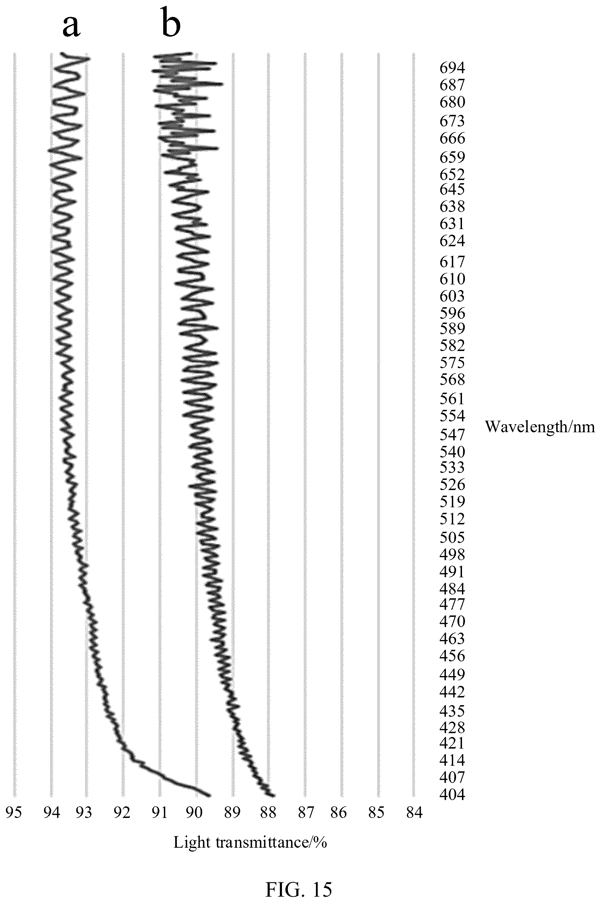

The light-transmitting plate prepared in Embodiment 1 has an antireflective function. As shown in FIG. 15, in a 400 nm to 700 nm wavelength band of visible light, an average light transmittance of the polyethylene terephthalate (PET) transparent base is 89.75% (refer to an indication line b in the figure). After the transparent superhydrophobic layer is imprinted on the transparent base, an average light transmittance of the light-transmitting plate is increased to 93.19% (refer to an indication line a in the figure), and excellent antireflective effect is achieved. At a 550 nm wavelength, a measured haze value of the polyethylene terephthalate (PET) transparent base is 0.6% to 0.7%. After the transparent superhydrophobic layer is imprinted, a measured haze value is 0.9% to 1%, which is still a low haze value. In this way, clear imaging can be ensured during application.

The transparent superhydrophobic layer on the light-transmitting plate prepared in Embodiment 1 further has excellent wear resistance. In a test performed by using a dust-free paper grinding head with a diameter of 1.3 cm and force of 500 g, after 2000 times of grinding, a water contact angle of the transparent superhydrophobic layer is still 145° to 155°, and a roll angle is still 5° to 12°.

Embodiment 2

Embodiment 2 provides an image shooting apparatus. The image shooting apparatus is considered as a photosensitive apparatus. For a structure of the image shooting apparatus, refer to FIG. 8. The image shooting apparatus includes a camera (that is, the device body 301 in FIG. 8) and a lens cover (that is, the mechanical part 200 in FIG. 8). The lens cover includes a window portion 201 and a side frame portion 202 disposed around an outer side of the window portion 201. The window portion 201 is prepared by using the light-transmitting plate in Embodiment 1. The side frame portion 202 is in a cylindrical frame shape, has an inner thread on an inner wall of the side frame portion 202, and has an outer thread at a corresponding position on a lens of the camera. The lens cover is connected to the lens of the camera by using the threads, and the window portion 201 of the lens cover is opposite to a window (that is, the light-transmitting portion 3010 in FIG. 8) of the lens.

The image shooting apparatus is used as a mine camera in a mine, and is placed on a fully mechanized mining face with heavy fog and a high coal dust concentration. The window portion of the lens cover is processed. Half of the transparent superhydrophobic layer is stripped, and only the other half of the transparent superhydrophobic layer is left. It is observed that the lens cover is generally in a clean state before the lens cover is placed in the mine. After the lens cover is placed in the mine for seven days, an area in which the transparent superhydrophobic layer on the lens cover is stripped has heavy dirt, and the lens cannot be clearly viewed through the dirt. However, an area in which the transparent superhydrophobic layer on the lens cover is retained is clean, a small amount of dirt adheres to the lens, and the lens can be clearly viewed through the dirt. This indicates that the transparent superhydrophobic layer has excellent self-cleaning effect.

The foregoing descriptions are merely intended to help a person skilled in the art understand the technical solutions of this disclosure, and are not intended to limit this disclosure. Any modification, equivalent replacement, or improvement made without departing from the spirit and principle of this disclosure shall fall within the protection scope of this disclosure.

## Claims

1. A light-transmitting plate, wherein the light-transmitting plate (100) comprises a transparent base (11) and a transparent superhydrophobic layer (12);

   the transparent superhydrophobic layer (12) comprises a polymer film body (121) and a nano array structure (120), the polymer film body (121) is formed on a surface of the transparent base (11), and the nano array structure (120) is integrally formed on a surface that is of the polymer film body (121) and that is away from the transparent base (11); and
   the nano array structure (120) is arranged at a single layer, an array periodicity of the nano array structure (120) is less than or equal to a wavelength of a target light ray, and the target light ray is a light ray transmitted through the light-transmitting plate.

2. The light-transmitting plate according to claim 1, wherein the nano array structure (120) has a fluorine element, and a content of the fluorine element gradually increases from an inside of the nano array structure (120) to a surface of the nano array structure (120).

3. The light-transmitting plate according to claim 2, wherein a content of the fluorine element on an upper surface that is of the nano array structure (120) and that is away from the polymer film body (121) is greater than or equal to 20 atm%; and
   a content of the fluorine element at a position that is of the nano array structure (120) and that is 50 nm from the surface is greater than or equal to 2 atm%.

4. The light-transmitting plate according to claim 1, wherein the transparent superhydrophobic layer (12) is prepared on the transparent base (11) by using a first raw material through a nanoimprinting process, wherein the first raw material comprises a hydrophobic substance.

5. The light-transmitting plate according to claim 1, wherein an intermediate film layer having the nano array structure (120) is prepared on the transparent base (11) by using a second raw material through a nanoimprinting process; and the nano array structure (120) is modified by using a hydrophobic substance, to form a hydrophobic film on the nano array structure (120), and the transparent superhydrophobic layer (12) is prepared.

6. The light-transmitting plate according to any one of claims 1 to 5, wherein the nano array structure (120) comprises a plurality of nanostructure units, and a structure of the plurality of nanostructure units comprises at least one of a columnar shape, a columnar like shape, a truncated cone shape, a truncated cone like shape, a conical shape, a conical like shape, a needle shape, or a needle like shape.

7. The light-transmitting plate according to any one of claims 1 to 6, wherein the nano array structure (120) comprises the plurality of nanostructure units, and there is a nano-level rough structure on a surface of the nanostructure unit.

8. The light-transmitting plate according to any one of claims 1 to 7, wherein a ratio of an area of the upper surface of the nano array structure (120) to an area of a plane in which the nano array structure (120) is located is less than or equal to 30%.

9. The light-transmitting plate according to any one of claims 1 to 7, wherein the nano array structure (120) comprises the plurality of nanostructure units, and a structure parameter of the nanostructure unit meets at least one of the following conditions:

   a ratio of an average diameter of the nanostructure unit to the wavelength of the target light ray is 1:40 to 1:2; or
   a ratio of a height of the nanostructure unit to the wavelength of the target light ray is 1:10 to 1:1.

10. A mechanical part, wherein the mechanical part (200) comprises a window portion (201) and a side frame portion (202), and the side frame portion (202) is disposed around an outer side of the window portion (201); and
    the window portion (201) is prepared by using the light-transmitting plate (100) according to any one of claims 1 to 9.

11. The mechanical part according to claim 10, wherein the side frame portion (202) has a connection structure, and the connection structure is configured to detachably connect the side frame portion (202) to a device body (301); and
the connection structure comprises a threaded structure.

12. A photosensitive apparatus, wherein the photosensitive apparatus (300) comprises the mechanical part (200) and the device body (301) according to any one of claims 10 and 11.

13. The photosensitive apparatus according to claim 12, wherein the device body (301) has a light-transmitting portion (3010); and
the mechanical part (200) is connected to the device body (301) and seals the light-transmitting portion (3010), and the light-transmitting portion (3010) is opposite to the window portion (201) of the mechanical part (200).

14. The photosensitive apparatus according to claim 13, wherein the photosensitive apparatus (300) further comprises a cleaning mechanism, the cleaning mechanism is connected to the device body (301), and the cleaning mechanism is configured to clean the window portion (201).

100

FIG. 1

100

FIG. 2

100

FIG. 3

FIG. 4

FIG. 5

FIG. 6

FIG. 7

FIG. 8

FIG. 9

FIG. 10

FIG. 11

S4800 10.0kV 10.7mm x100k SE(U)    500nm

FIG. 12

FIG. 13

Contact angle 161.8°

Roll angle 5.5°

FIG. 14

FIG. 15

## INTERNATIONAL SEARCH REPORT

| International application No. |
|---|
| **PCT/CN2023/103194** |

**A. CLASSIFICATION OF SUBJECT MATTER**

C08J7/04(2020.01)i; C08L67/02(2006.01)i; C09D4/02(2006.01)i; C03C17/42(2006.01)i; C03B23/02(2006.01)i

According to International Patent Classification (IPC) or to both national classification and IPC

**B. FIELDS SEARCHED**

Minimum documentation searched (classification system followed by classification symbols)

IPC: C08J, C08L, C09D, C03C, C03B

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI, WEB OF SCIENCE: 透光, 透明, 超疏水, 阵列, 纳米, 自清洁, light transmission, transmit, transparent, hydrophobic, hydrophobous, washing repellent, array, periodic, nanometre, micromillimeter, millimicron, self cleaning

**C. DOCUMENTS CONSIDERED TO BE RELEVANT**

| Category* | Citation of document, with indication, where appropriate, of the relevant passages | Relevant to claim No. |
|---|---|---|
| PX | CN 218290787 U (HUAWEI TECHNOLOGIES CO., LTD.) 13 January 2023 (2023-01-13) claims | 1-14 |
| E | CN 116764914 A (SUN YAT-SEN UNIVERSITY) 19 September 2023 (2023-09-19) description, paragraphs 0005-0041, and embodiment 1 | 1-2, 4-8 |
| X | CN 111454000 A (UNIVERSITY OF ELECTRONIC SCIENCE AND TECHNOLOGY OF CHINA) 28 July 2020 (2020-07-28) description, paragraphs 0008-0061 | 1-14 |
| X | CN 105860870 A (BOE TECHNOLOGY GROUP CO., LTD. et al.) 17 August 2016 (2016-08-17) description, paragraphs 0004-0034, and embodiments | 1-14 |
| X | CN 111293971 A (UNIVERSITY OF ELECTRONIC SCIENCE AND TECHNOLOGY OF CHINA et al.) 16 June 2020 (2020-06-16) description, paragraphs 0004-0021, and embodiments | 1-14 |

☑ Further documents are listed in the continuation of Box C. ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 October 2023** | **23 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/103194** |

### C.    DOCUMENTS CONSIDERED TO BE RELEVANT

| Category* | Citation of document, with indication, where appropriate, of the relevant passages | Relevant to claim No. |
| --- | --- | --- |
| X | US 2010098909 A1 (REYSSAT MATHILDE; CHEN YONG et al.) 22 April 2010 (2010-04-22)<br>    description, paragraphs 0015-0068, and embodiments | 1-14 |
| A | CN 101519278 A (JILIN UNIVERSITY) 02 September 2009 (2009-09-02)<br>    entire document | 1-14 |
| A | CN 102312226 A (EAST CHINA JIAOTONG UNIVERSITY) 11 January 2012 (2012-01-11)<br>    entire document | 1-14 |
| A | CN 106398332 A (XI'AN JIAOTONG UNIVERSITY) 15 February 2017 (2017-02-15)<br>    entire document | 1-14 |
| A | KR 20130014135 A (INDUSTRY FOUNDATION OF CHONNAM NATIONAL UNIVERSITY) 07 February 2013 (2013-02-07)<br>    entire document | 1-14 |
| A | US 2014011013 A1 (JIN SUNGHO; CHOI CHULMIN; UNIVERSITY OF CALIFORNIA;) 09 January 2014 (2014-01-09)<br>    entire document | 1-14 |
| A | US 2022179127 A1 (THALES SA.) 09 June 2022 (2022-06-09)<br>    entire document | 1-14 |

Form PCT/ISA/210 (second sheet) (July 2022)

## INTERNATIONAL SEARCH REPORT
### Information on patent family members

International application No.

**PCT/CN2023/103194**

| Patent document cited in search report | | | Publication date (day/month/year) | Patent family member(s) | | | Publication date (day/month/year) |
|---|---|---|---|---|---|---|---|
| CN | 218290787 | U | 13 January 2023 | None | | | |
| CN | 116764914 | A | 19 September 2023 | None | | | |
| CN | 111454000 | A | 28 July 2020 | None | | | |
| CN | 105860870 | A | 17 August 2016 | None | | | |
| CN | 111293971 | A | 16 June 2020 | US | 2021193856 | A1 | 24 June 2021 |
| | | | | US | 11127870 | B2 | 21 September 2021 |
| US | 2010098909 | A1 | 22 April 2010 | DE | 602008004450 | D1 | 24 February 2011 |
| | | | | WO | 2008116994 | A2 | 02 October 2008 |
| | | | | WO | 2008116994 | A3 | 27 November 2008 |
| | | | | US | 8298649 | B2 | 30 October 2012 |
| | | | | EP | 2117735 | A2 | 18 November 2009 |
| | | | | EP | 2117735 | B1 | 12 January 2011 |
| | | | | JP | 2010520493 | A | 10 June 2010 |
| | | | | JP | 5560046 | B2 | 23 July 2014 |
| | | | | AT | 494966 | T | 15 January 2011 |
| | | | | FR | 2913231 | A1 | 05 September 2008 |
| | | | | FR | 2913231 | B1 | 10 July 2009 |
| CN | 101519278 | A | 02 September 2009 | None | | | |
| CN | 102312226 | A | 11 January 2012 | None | | | |
| CN | 106398332 | A | 15 February 2017 | None | | | |
| KR | 20130014135 | A | 07 February 2013 | KR | 101325010 | B1 | 04 November 2013 |
| US | 2014011013 | A1 | 09 January 2014 | US | 9956743 | B2 | 01 May 2018 |
| | | | | US | 2018297321 | A1 | 18 October 2018 |
| | | | | US | 10569506 | B2 | 25 February 2020 |
| | | | | WO | 2012087352 | A2 | 28 June 2012 |
| | | | | WO | 2012087352 | A3 | 24 January 2013 |
| | | | | WO | 2012088209 | A2 | 28 June 2012 |
| | | | | WO | 2012088209 | A3 | 07 February 2013 |
| | | | | US | 2020198291 | A1 | 25 June 2020 |
| | | | | US | 11090903 | B2 | 17 August 2021 |
| US | 2022179127 | A1 | 09 June 2022 | FR | 3093568 | A1 | 11 September 2020 |
| | | | | CA | 3132787 | A1 | 10 September 2020 |
| | | | | WO | 2020178304 | A1 | 10 September 2020 |
| | | | | EP | 3935421 | A1 | 12 January 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210901538